# DEMANDE DE BREVET EUROPEEN

(11) **EP 2 502 722 A1**
(43) Date de publication de la demande: **26.09.2012**
(21) Numéro de dépôt: 12160595.0
(22) Date de dépôt: 21.03.2012
(51) Int. Cl.: B28C 7/00, B28C 9/02, B28C 7/04, B65B 1/04

(54) **Installation pour le séchage, le mélange et l'ensachage de produits minéraux.**

(30) Priorité: 25.03.2011 FR 1100890
(71) Demandeur: Bruant Projets, 80120 Rue (FR)
(72) Inventeur: Bruant, Philippe, 80120 RUE (FR)
(74) Mandataire: Bureau Duthoit Legros Associés

(57) **Abrégé**

L'invention concerne une installation (1) pour le séchage, le mélange et l'ensachage de produits minéraux, comprenant :
- une unité (10) de transfert et de mise en stock de produits minéraux humides, tels que des sables, ou des graviers,
- une unité (20) de séchage,
- une unité (30) de stockage et de transfert des au moins deux produits minéraux différents séchés,
- une unité (40) de stockage de produits pulvérulents,
- une unité (50) de mélange destinée pour le mélange des produits minéraux séchés et des produits pulvérulents,
- une unité (60) d'emballage de produits.

## Description

L'invention est relative à une installation pour le séchage, le mélange et l'ensachage de produits minéraux et trouvera une application particulière pour la préparation de sacs de mortier sec et/ou de sacs de béton sec à partir de matières premières telles que du ciment, des sables humides (non séchés), des graviers humides (non séchés) et du filler.

Eventuellement, l'installation trouvera également une application pour l'ensachage de produits minéraux humides (non séchés) tels que des sables humides ou des graviers humides.

Aujourd'hui il est connu de l'état de l'art, pour la préparation de mortier sec ou de béton sec, de sécher des produits minéraux, de les mélanger avec du ciment, puis d'ensacher le produit du mélange.

A ce jour, selon les connaissances de l'inventeur, ces différentes étapes sont mises en oeuvre dans différentes installations, situées dans des lieux différents. La mise en oeuvre d'un tel procédé de l'état de la technique nécessite donc de convoyer, généralement par camion, les matières minérales traitées d'une installation à l'autre, ce qui se répercute dans le coût de revient de la production.

Le but de la présente invention est de pallier les inconvénients précités en proposant une installation convenant pour la préparation et l'ensachage de mortier sec et/ou de béton sec.

Un autre but de l'invention est de proposer une telle installation, polyvalente, qui permette, en outre, l'ensachage de produits minéraux humides tels que sables humides ou gravier humide.

D'autres buts et avantages apparaitront de la description qui n'est donnée qu'à titre indicatif et qui n'a pas pour but de la limiter.

Aussi l'invention concerne une installation pour le séchage, le mélange et l'ensachage de produits minéraux, comprenant :
- une unité de transfert et de mise en stock de produits minéraux humides, tels que des sables ou des graviers, comprenant :
   - au moins deux réservoirs de stockage de produits humides minéraux, destinés pour le stockage de manière indépendante d'au moins deux produits humides différents,
   - une trémie de réception,
   - des moyens de convoyage, dits premiers moyens de convoyage, permettant l'acheminement desdits au moins deux produits humides différents déchargés dans ladite trémie de réception, sélectivement, vers l'un desdits au moins deux réservoirs de stockage de produits humides minéraux,
- une unité de séchage, comprenant :
   - un dispositif sécheur comprenant un tambour rotatif, et une source d'air chaud,
   - des moyens de convoyage, dits seconds moyens de convoyage, permettant l'acheminement des produits humides minéraux, sélectivement, depuis l'un desdits au moins deux réservoirs de stockage de produits humides minéraux vers l'entrée dudit dispositif sécheur,
- une unité de stockage et de transfert desdits au moins deux produits minéraux différents séchés, comprenant :
   - au moins deux réservoirs de stockage de produits minéraux séchés, destinés pour le stockage de manière indépendante des au moins deux produits minéraux séchés,
   - des moyens de convoyage, dits troisièmes moyens de convoyage, permettant l'acheminement desdits au moins deux produits séchés en sortie dudit dispositif sécheur vers, sélectivement, l'un des desdits au moins deux réservoirs de stockage de produits minéraux séchés,
- une unité de stockage de produits pulvérulents, comprenant :
   - au moins deux réservoirs de stockage de produits pulvérulents, destinés au stockage de manière indépendante de deux produits pulvérulents différents, tels que du ciment et du filler,
- une unité de mélange destinée pour le mélange des produits minéraux séchés et des produits pulvérulents comprenant :
   - un malaxeur,
   - des moyens de dosage et des moyens de convoyage, dits quatrièmes moyens de convoyage, permettant sélectivement, le dosage et l'acheminement des produits minéraux séchés contenus dans chacun desdits au moins deux réservoirs de stockage de produits minéraux séchés et dans chacun desdits au moins deux réservoirs de stockage de produits pulvérulents, vers ledit malaxeur,
- une unité d'emballage de produits comprenant :
   - un dispositif ensacheur,
   - des moyens de convoyage, dits cinquièmes moyens de convoyage, permettant l'acheminement desdits produits mélangés depuis le malaxeur vers le dispositif ensacheur.

Selon un mode de réalisation, l'unité de séchage comprend un dépoussiéreur avec filtre à manches à décolmatage automatique pour le dépoussiérage des gaz chauds s'échappant dudit dispositif sécheur et des moyens pour introduire les poussières de décolmatage avec les produits séchés sur lesdits troisièmes moyens de convoyage.

Une telle installation peut permettre la fabrication et l'ensachage de mortier sec à partir de sables humides et de ciment, voir de filler par la mise en oeuvre des étapes suivantes :
- séchage des sables humides dans le dispositif sécheur,
- mélange des sables séchés et ciment, le cas échéant avec du filler, dans le malaxeur obtenant un mortier sec,
- ensachage dudit mortier sec dans l'unité d'emballage.

Une telle installation peut permettre également la fabrication et l'ensachage de béton sec à partir de sables humides, de graviers humides et ciment, voire filler, par la mise en oeuvre de étapes suivantes :
- séchage des sables humides dans ledit dispositif sécheur,
- séchage des graviers humides dans ledit dispositif sécheur,
- mélange des sables secs, graviers secs, et ciment, le cas échéant avec filler, dans le malaxeur, obtenant un béton sec,
- ensachage dudit béton sec dans l'unité d'emballage.

Selon un mode de réalisation, l'installation peut comprendre des moyens de convoyage, dits sixièmes moyens de convoyage, permettant l'acheminement des produits minéraux humides minéraux, sélectivement, depuis lesdits au moins deux réservoirs de stockage de produits humides minéraux vers l'unité d'emballage de produits.

Selon ce dernier mode de réalisation, l'installation peut permettre l'ensachage de sables humides ou l'ensachage de graviers humides.

L'invention sera mieux comprise à la lecture de la description suivante accompagnée des dessins en annexe parmi lesquels :

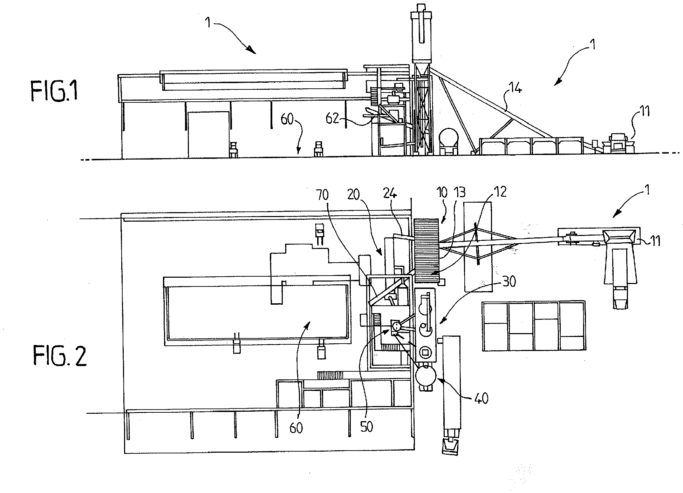

- la figure 1 est une vue de face d'une installation conforme à l'invention selon un mode de réalisation,
- la figure 2 est une vue de dessus de l'installation telle qu'illustrée à la figure 1,
- la figure 3 est une vue de côté de l'installation telle qu'illustrée à la figure 1,
- la figure 4 est une vue de dessus, partielle, de l'installation telle qu'illustrée à la figure 1,
- la figure 5 est une vue de détail de l'unité d'emballage de l'installation de la figure 1,

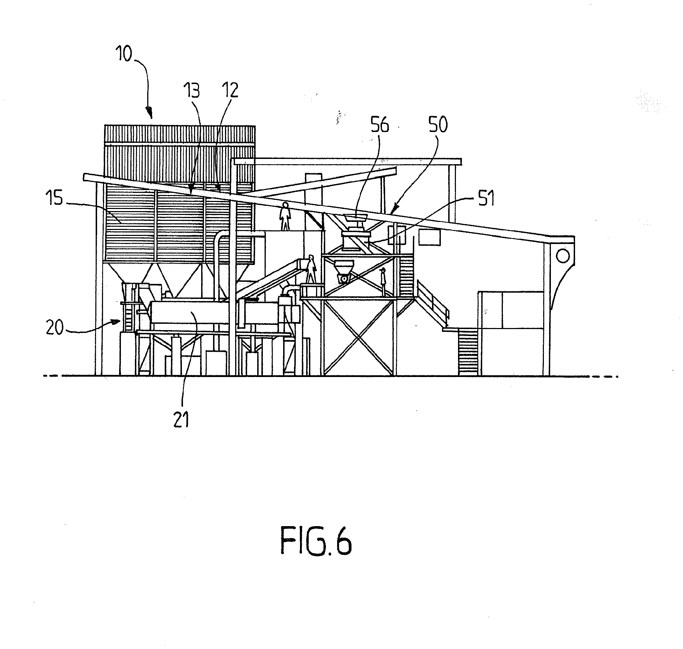

- la figure 6 est une vue de côté, partielle, de l'installation telle qu'illustrée à la figure 4.

Aussi, l'invention concerne une installation 1 pour le séchage, le mélange et l'ensachage de produits minéraux, comprenant :
- une unité 10 de transfert et de mise en stock de produits minéraux humides,
- une unité 20 de séchage,
- une unité 30 de stockage et de transfert des au moins deux produits minéraux différents séchés,
- une unité 40 de stockage de produits pulvérulents,
- une unité 50 de mélange destinée pour le mélange des produits minéraux séchés et des produits pulvérulents,
- une unité 60 d'emballage de produits.

Plus particulièrement, ladite unité 10 de transfert et de mise en stock de produits minéraux humides, tels que des sables, ou des graviers comprend :
- au moins deux réservoirs 12, 13 de stockage de produits humides minéraux, destinés pour le stockage de manière indépendante d'au moins deux produits humides différents,
- une trémie de réception 11,
- des moyens de convoyage 14, dits premiers moyens de convoyage, permettant l'acheminement desdits au moins deux produits humides différents déchargés dans ladite trémie de réception 11, sélectivement, vers l'un desdits au moins deux réservoirs 12, 13 de stockage de produits humides minéraux.

La trémie de réception 11 a pour objet de permettre le déchargement des produits minéraux tels que des sables et des graviers. Classiquement ces produits sont acheminés depuis la ou les carrières voisines par camion.

Chaque produit minéral (i.e sables ou graviers) est déchargé de manière indépendante dans la trémie de réception, puis transporté par lesdits moyens de convoyage jusqu'à l'un des au moins deux réservoirs 12, 13, de stockage de produits humides minéraux.

A cet effet, selon l'exemple illustré, les moyens de convoyage peuvent être constitués par un convoyeur à bande (i.e. sauterelle), orientable vers l'un ou l'autre desdits au moins deux réservoirs 12, 13 de stockage de produits humides minéraux.

Selon un mode de réalisation illustré, ladite unité 10 de transfert et de mise en stock de produits minéraux humides peut présenter trois réservoirs de stockage de produits minéraux humides 12, 13,15.

Ladite unité 20 de séchage, comprend :
- un dispositif sécheur 21 comprenant un tambour rotatif 22, et une source d'air chaud,
- des moyens de convoyage 24, dits seconds moyens de convoyage, permettant l'acheminement des produits humides minéraux, sélectivement, depuis l'un desdits au moins deux réservoirs 12, 13 de stockage de produits humides minéraux vers l'entrée dudit dispositif sécheur 21.

Le dispositif sécheur 21 permet le séchage des matières dans le tambour rotatif 22, par les actions combinées du retournement des matières par la rotation du tambour et le soufflage d'air chaud, par exemple à 850°C.

L'air chaud peut être engendré grâce à un brûleur du dispositif fonctionnant au gaz naturel.

Les moyens de convoyage 24 peuvent être constitués par un ou plusieurs tapis vibrant.

Dans le dispositif sécheur 21, on sèche de manière indépendante, chacun desdits deux produits humides minéraux, obtenant un produit minéral séché, tel que par exemple des sables séchés ou des graviers séchés.

Les gaz chauds s'échappant du dispositif sécheur 21 peuvent être dépoussiérés. A cet effet, l'unité de séchage peut présenter un dépoussiéreur avec filtre à manches à décolmatage automatique, un ventilateur d'extraction et une cheminée d'exhaure.

Les poussières filtrées peuvent, à intervalle régulier, être réintroduites, après chaque décolmatage du filtre du dépoussiéreur, avec les produits séchés.

Ladite unité 30 de stockage et de transfert des au moins deux produits minéraux différents séchés, comprend :
- au moins deux réservoirs 31, 32 de stockage de produits minéraux séchés, destinés pour le stockage de manière indépendante des au moins deux produits minéraux séchés,
- des moyens de convoyage 33, 34, dits troisièmes moyens de convoyage, permettant l'acheminement desdits au moins deux produits séchés en sortie dudit dispositif sécheur 21 vers, sélectivement, l'un ou l'autre desdits au moins deux réservoirs 31, 32 de stockage de produits minéraux séchés.

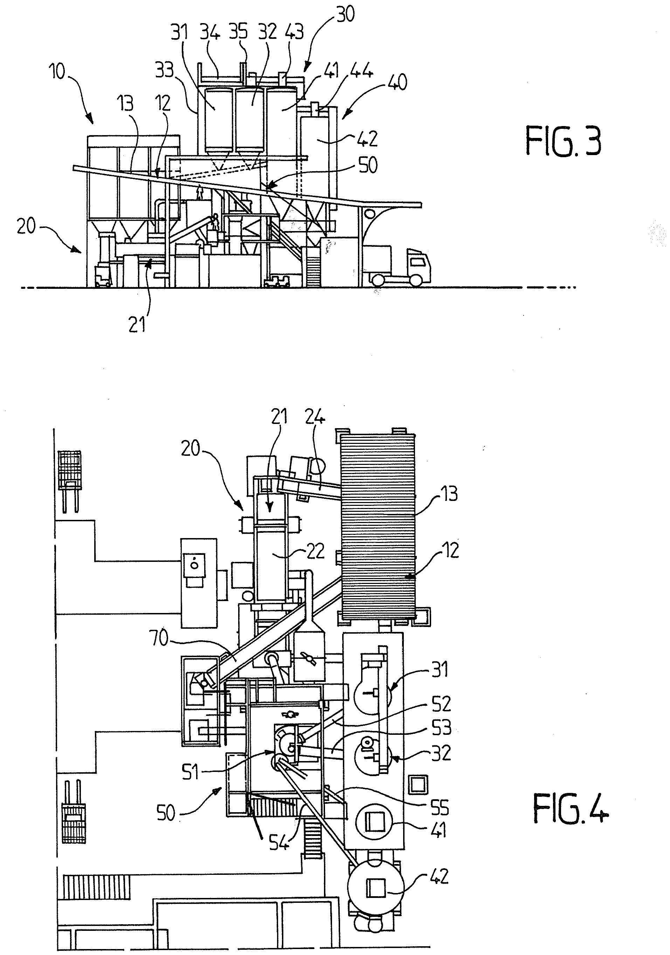

Tels qu'illustrés à la figure 3, lesdits moyens de convoyage peuvent comprendre, à la sortie du dispositif sécheur 21, un élévateur à godets 33 permettant de remonter les produits séchés depuis ledit dispositif sécheur 21, jusqu'à la partie supérieure des au moins deux réservoirs 31, 32 de stockage de produits minéraux séchés, ainsi qu'une vis de transport 34, en partie supérieure des réservoirs 31, 32 pour distribuer les produits remontés à l'un ou à l'autre desdits au moins deux réservoirs 31, 32 de stockage de produits minéraux séchés.

En outre, une vis en auge peut être prévue à la sortie du dispositif sécheur 21 pour acheminer les produits séchés jusqu'audit élévateur à godets 33.

Les poussières filtrées du dépoussiéreur de l'unité de séchage peuvent tomber, à chaque décolmatage, dans les troisièmes moyens de convoyage, et plus particulièrement dans la vis en auge, située à l'aplomb et au dessus du dépoussiéreur.

Lesdits au moins deux réservoirs 31, 32 peuvent être équipés d'un système de filtre 35 pour le dépoussiérage. L'un des réservoirs 31, 32 peut permettre de stocker les graviers séchés et l'autre réservoir les sables séchés.

Ladite unité 40 de stockage de produits pulvérulents, comprend au moins deux réservoirs 41, 42 de stockage de produits pulvérulents, destinés au stockage de manière indépendante de deux produits pulvérulents différents, tels que du ciment et du filler.

Par exemple, l'un des au moins deux réservoirs 41, 42 peut être utilisé pour stocker du ciment et l'autre pour stocker du filler. Chaque réservoir 41, 42 peut être équipé d'un système 43, 44 de filtrage des poussières pneumatiques. Chaque réservoir 41, 42 peut être rempli grâce à un réseau de conduite, par transport pneumatique.

Ladite unité 50 de mélange destinée pour le mélange des produits minéraux séchés et des produits pulvérulents comprend :
- un malaxeur 51,
- des moyens de dosage et des moyens de convoyage 52, 53, 54, 55, dits quatrièmes moyens de convoyage, permettant sélectivement, le dosage et l'acheminement des produits minéraux séchés contenus dans chacun desdits au moins deux réservoirs 31, 32 de stockage de produits minéraux séchés et chacun desdits au moins deux réservoirs 41, 42 de stockage de produits pulvérulents, vers ledit malaxeur 51.

Ledit malaxeur 51 peut être un malaxeur à cuve fixe et à train valseur.

Lesdits quatrièmes moyens de convoyage peuvent être constitués par des vis de transport 52, 53, 54, 55, joignant respectivement les sorties des réservoirs 31, 32, 41, 42 à l'entrée du malaxeur 51. Selon l'exemple des figures, ces vis de transport sont au nombre de quatre.

Ladite unité 60 d'emballage de produits comprend :
- un dispositif ensacheur 61,
- des moyens de convoyage 62, dits cinquièmes moyens de convoyage, permettant l'acheminement desdits produits mélangés depuis le malaxeur 51 vers le dispositif ensacheur 61.

Plus particulièrement les moyens de convoyage peuvent présenter une trémie de réception à la sortie du malaxeur 51 et une vis de transport acheminant les produits mélangés jusqu'à une trémie 64 d'un dispositif de dosage 63.

Ce dispositif de dosage 63 permet de délivrer une quantité de produits au dispositif ensacheur 61 pour le remplissage d'un sac.

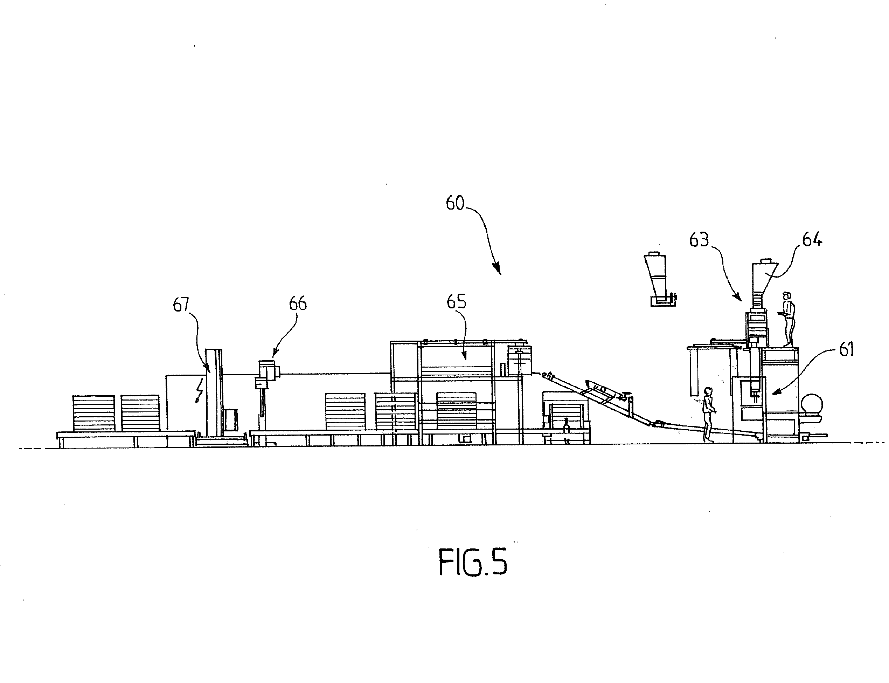

Ladite unité 60 peut, en outre présenter, telle qu'illustrée à la figure 5, un palettiseur 65, un système de dépose de coiffe automatique 66, et une banderoleuse automatique 67.

Selon un mode de réalisation illustré, l'installation peut présenter des moyens de convoyage 70, dits sixièmes moyens de convoyage, permettant l'acheminement des produits humides minéraux, sélectivement, depuis lesdits au moins deux réservoirs 12, 13, 15 de stockage de produits humides minéraux vers l'unité 60 d'emballage de produits.

Selon un mode de réalisation non illustré, l'installation peut présenter une deuxième unité d'emballage de produits, spécialement destinée à l'ensachage des produits minéraux humides.

Les moyens de convoyage 70 peuvent être constitués par un tapis vibrant, Ils permettent d'acheminer directement les produits minéraux humides depuis lesdits au moins deux réservoirs 12, 13, 15 vers l'unité d'emballage 60, sans passer par le dispositif sécheur ou encore le malaxeur.

L'installation conforme à l'invention trouve une application particulière pour la fabrication et l'ensachage de mortier sec à partir de sables humides et ciment, voire filler, par la mise en oeuvre des étapes suivantes :
- séchage des sables humides dans ledit dispositif sécheur 21,
- mélange des sables séchés et ciment, le cas échéant avec du filler, dans le malaxeur 51, obtenant un mortier sec,
- ensachage dudit mortier sec dans l'unité 60 d'emballage.

L'installation conforme à l'invention trouve également une application particulière pour la fabrication et l'ensachage de béton sec à partir de sables humides, de graviers humides et ciment, voire filler, par la mise en oeuvre de étapes suivantes :
- séchage des sables humides dans ledit dispositif sécheur 21,
- séchage des graviers humides dans ledit dispositif sécheur 21,
- mélange des sables secs, graviers secs, et ciment, le cas échéant avec filler, dans le malaxeur 51, obtenant un béton sec,
- ensachage dudit béton sec dans l'unité 60 d'emballage.

Eventuellement l'installation conforme à l'invention trouve également une application particulière pour l'ensachage de sables humides ou l'ensachage de graviers humides.

Naturellement d'autres modes de réalisation auraient pu être envisagés par l'homme du métier sans pour autant sortir du cadre de l'invention défini par les revendications ci-après.

## Revendications

1. Installation (1) pour le séchage, le mélange et l'ensachage de produits minéraux, comprenant :
- une unité (10) de transfert et de mise en stock de produits minéraux humides, tels que des sables, ou des graviers comprenant :
- au moins deux réservoirs (12, 13) de stockage de produits humides minéraux, destinés pour le stockage de manière indépendante d'au moins deux produits humides différents,
- une trémie de réception (11),
- des moyens de convoyage (14), dits premiers moyens de convoyage, permettant l'acheminement desdits au moins deux produits humides différents déchargés dans ladite trémie de réception (11), sélectivement, vers l'un desdits au moins deux réservoirs (12, 13) de stockage de produits humides minéraux,
- une unité (20) de séchage, comprenant :
- un dispositif sécheur (21) comprenant un tambour rotatif (22), et une source d'air chaud,
- des moyens de convoyage (24), dits seconds moyens de convoyage, permettant l'acheminement des produits humides minéraux, sélectivement, depuis l'un desdits au moins deux réservoirs (12, 13) de stockage de produits humides minéraux vers l'entrée dudit dispositif sécheur (21),
- une unité (30) de stockage et de transfert des au moins deux produits minéraux différents séchés, comprenant :
- au moins deux réservoirs (31, 32) de stockage de produits minéraux séchés, destinés pour le stockage de manière indépendante des au moins deux produits minéraux séchés,
- des moyens de convoyage, dits troisièmes moyens de convoyage, permettant l'acheminement desdits au moins deux produits séchés en sortie dudit dispositif sécheur (21) vers, sélectivement, l'un des desdits au moins deux réservoirs (31, 32) de stockage de produits minéraux séchés,
- une unité (40) de stockage de produits pulvérulents, comprenant :
- au moins deux réservoirs (41, 42) de stockage de produits pulvérulents, destinés au stockage de manière indépendante de deux produits pulvérulents différents, tels que du ciment et du filler,
- une unité (50) de mélange destinée pour le mélange des produits minéraux séchés et des produits pulvérulents comprenant:
- un malaxeur (51),
- des moyens de dosage et des moyens de convoyage (52, 53, 54, 55), dits quatrièmes moyens de convoyage, permettant sélectivement, le dosage et l'acheminement des produits minéraux séchés contenus dans chacun desdits au moins deux réservoirs (31, 32) de stockage de produits minéraux séchés et chacun desdits au moins deux réservoirs (41, 42) de stockage de produits pulvérulents, vers ledit malaxeur (51),
- une unité (60) d'emballage de produits comprenant :
- un dispositif ensacheur (61),
- des moyens de convoyage, dits cinquièmes moyens de convoyage, permettant l'acheminement desdits produits mélangés depuis le malaxeur (51) vers le dispositif ensacheur (61).

2. Installation selon la revendication 1, comprenant des moyens de convoyage, dits sixièmes moyens de convoyage, permettant l'acheminement des produits humides minéraux, sélectivement, depuis lesdits au moins deux réservoirs (12, 13) de stockage de produits humides minéraux vers l'unité (60) d'emballage de produits.

3. Installation selon la revendication 1 ou 2, dans laquelle l'unité (20) de séchage comprend un dépoussiéreur avec filtre à manches à décolmatage automatique destiné pour le dépoussiérage des gaz chauds s'échappant dudit dispositif sécheur (21) et des moyens pour introduire les poussières de décolmatage avec les produits séchés sur lesdits troisièmes moyens de convoyage.

4. Utilisation de l'installation selon la revendication 1 ou 2, pour la fabrication et l'ensachage de mortier sec à partir de sables humides et ciment, voir filler, par la mise en oeuvre de étapes suivantes :
- séchage des sables humides dans ledit dispositif sécheur (21),
- mélange des sables séchés et ciment, le cas échéant avec du filler, dans le malaxeur (51), obtenant un mortier sec,
- ensachage dudit mortier sec dans l'unité (60) d'emballage.

5. Utilisation de l'installation selon la revendication 1, 2 ou 3, pour la fabrication et l'ensachage de béton sec à partir de sables humides, de graviers humides et ciment, voir filler, par la mise en oeuvre de étapes suivantes :
- séchage des sables humides dans ledit dispositif sécheur (21),
- séchage des graviers humides dans ledit dispositif sécheur (21),
- mélange des sables sec, graviers secs, et ciment, le cas échéant avec filler, dans le malaxeur (51), obtenant un béton sec,
- ensachage dudit béton sec dans l'unité (60) d'emballage.

6. Utilisation de l'installation selon la revendication 2 pour l'ensachage de sables humides ou l'ensachage de graviers humides.
